# EUROPÄISCHE PATENTANMELDUNG

(11) **EP 3 825 739 A1**
(43) Veröffentlichungstag der Anmeldung: **26.05.2021**
(21) Anmeldenummer: 20208581.7
(22) Anmeldetag: 19.11.2020
(51) Int. Cl.: G02B 1/116, G01J 3/02, G02B 5/00, H01L 31/0203

(54) **STÖRSTRAHLUNG REDUZIERENDES SCHICHTSYSTEM UND BAUTEIL**

(30) Priorität: 21.11.2019 DE 102019131429
(71) Anmelder: Fraunhofer-Gesellschaft zur Förderung der angewandten Forschung e.V., 80686 München (DE)
(72) Erfinder: Schwinde, Stefan, 07745 Jena (DE); Schröder, Sven, 07745 Jena (DE); Schlegel, Ralph, 07745 Jena (DE); Munzert, Peter, 07745 Jena (DE)
(74) Vertreter: Epping - Hermann - Fischer

(57) **Zusammenfassung**

Es wird ein Störstrahlung reduzierendes Schichtsystem beschrieben, umfassend ein Substrat (1), mindestens eine über dem Substrat (1) angeordnete teiltransparente lichtabsorbierende Schicht (2), mindestens eine über der teiltransparenten lichtabsorbierenden Schicht (2) angeordnete teiltransparente Metallschicht (3) und mindestens eine über der teiltransparenten Metallschicht angeordnete reflexionsmindernde dielektrische Schicht (4).

Weiterhin wird ein Bauteil (100) mit einem Störstrahlung reduzierenden Schichtsystem (10) angegeben.

## Beschreibung

Die Erfindung betrifft ein Störstrahlung reduzierendes Schichtsystem, das insbesondere dazu vorgesehen ist, störende Lichtreflexionen an Oberflächen zu vermindern sowie ein Bauteil mit einem solchen Schichtsystem.

In optischen Systemen führen ungewollte Lichtreflektionen an passiven Bauteiloberflächen (an Flächen außerhalb von Spiegelflächen), wie z.B. Innenflächen von Gehäusen, zur Störstrahlung. Gelangt die Störstrahlung zu einem Detektor kommt es zu Störsignalen. Im Folgenden werden Störstrahlungen, die zu einem Störsignal führen können, als kritische Störstrahlungen bezeichnet. Für moderne optische Bauelemente besteht zunehmend der Anspruch, dass die gewünschte optische Wirkung in einem breiten spektralen Bereich erreicht wird, und dass eine Reinigung der funktionalen Flächen uneingeschränkt möglich ist.

Bisher werden Bauteiloberflächen zur Vermeidung kritischer Störstrahlung in der Regel stark aufgeraut, um spekulare Reflexionen zu vermeiden. Da dabei die reflektierte Strahlung lediglich umverteilt wird, ist der hemisphärische Reflexionsgrad gleichbleibend hoch. Daher wird die Oberfläche oft zusätzlich geschwärzt, um den Reflexionsgrad zu reduzieren. Dabei haben sich für einfache Anwendungen verschiedene Lacke etabliert, u.a. schwarzer Tafellack.

Eine ähnliche Herausforderung stellt die Erzielung einer möglichst hohen Lichtabsorption für Anwendungen wie z.B. solarthermische Anwendungen dar. Neben einer möglichst hohen Absorption ist für diese Anwendungen eine möglichst geringe IR-Emission von Interesse, um Wärmeverluste gering zu halten.

Aus der Druckschrift DE 10 2013 108 288 A1 ist ein Strahlungsabsorber mit einem Substrat bekannt, das Silizium oder eine Siliziumverbindung enthält und eine Oberflächenstruktur aufweist, die sich mindestens bis in eine Tiefe von 100 nm in das Substrat hinein erstreckt. Aufgrund der eigenschaftsprägenden Strukturen lässt sich ein solcher Strahlungsabsorber allerdings nur eingeschränkt reinigen, ohne die absorbierende Wirkung zu verlieren.

In der Druckschrift WO 2014/063954 A1 wird ein Licht absorbierendes Schichtsystem aus mindestens einer dem Betrachter zugewandten Antireflexschicht und einer Absorberschicht vorgeschlagen.

Eine zu lösende Aufgabe besteht darin, ein verbessertes Schichtsystem zur Reduzierung von Störstrahlung anzugeben, mit dem Störstrahlung effektiv vermindert werden kann.

Diese Aufgabe wird durch ein Störstrahlung reduzierendes Schichtsystem gemäß dem Anspruch 1 gelöst. Vorteilhafte Ausgestaltungen und Weiterbildungen sind Gegenstand der abhängigen Ansprüche.

Gemäß zumindest einer Ausführungsform umfasst das Störstrahlung reduzierende Schichtsystem ein Substrat, mindestens eine über dem Substrat angeordnete lichtabsorbierende Schicht, mindestens eine über der lichtabsorbierenden Schicht angeordnete teiltransparente Metallschicht, und mindestens eine über der teiltransparenten Metallschicht angeordnete reflexionsmindernde dielektrische Schicht.

Das Schichtsystem macht unter anderem von der Erkenntnis Gebrauch, dass durch die über der lichtabsorbierenden Schicht angeordnete teiltransparente Metallschicht die Absorption in der lichtabsorbierenden Schicht weiter erhöht werden kann. Durch die teiltransparente Metallschicht wird zumindest ein Teil des nicht absorbierten Lichts, das beispielsweise nach dem Durchgang durch die lichtabsorbierende Schicht am Substrat reflektiert worden ist, in die lichtabsorbierende Schicht zurückreflektiert. Auf diese Weise kann erreicht werden, dass das Licht die lichtabsorbierende Schicht mehrfach durchläuft. Weiterhin kann durch eine geeignete Einstellung der Schichtdicken eine destruktive Interferenz in dem Schichtsystem erzeugt werden und so die Reflexion minimiert werden. Die erforderlichen Schichtdicken sind von der Wellenlänge des Lichts und den optischen Konstanten der verwendeten Materialien abhängig und können mit dem Fachmann an sich bekannten Simulationsprogrammen berechnet werden. Durch die über der teilreflektierenden Metallschicht angeordnete reflexionsmindernde dielektrische Schicht wird die Reflexion für von außen auf die teilreflektierende Metallschicht auftreffende Strahlung weiter vermindert.

Das Schichtsystem wirkt insgesamt als Lichtfalle und erscheint für Betrachter schwarz. Insbesondere lässt sich mit dem Störstrahlung reduzierenden Schichtsystem eine breitbandige Entspiegelung mit einem Reflexionsgrad von weniger als 3% vom UV-Bereich über den sichtbaren Bereich bis in den IR-Bereich erzielen. Das Störstrahlung reduzierende Schichtsystem kann vorteilhaft mit herkömmlichen Methoden gereinigt werden, da es eine höhere mechanische Stabilität aufweist als beispielsweise strahlungsabsorbierende Schichten mit nadelförmigen Strukturen an der Oberfläche.

Das Substrat des Schichtsystems kann ein beliebiges Bauteil sein, bei dem durch Reflexion entstehende Störstrahlung minimiert werden soll. Das Substrat kann beispielsweise ein Gehäuse eines optischen oder optoelektronischen Bauteils sein. Das Substrat kann beispielsweise ein Metall, ein Halbleitermaterial, ein Glas oder einen Kunststoff aufweisen.

Gemäß zumindest einer Ausführungsform weist die lichtabsorbierende Schicht eine Dicke zwischen 25 nm und 500 nm auf. Die lichtabsorbierende Schicht ist bei einer solchen Dicke vorteilhaft noch teilweise transparent, so dass sie mehrfach von dem Licht durchquert werden kann. Für den Extinktionskoeffizienten κ der lichtabsorbierenden Schichten gilt beispielsweise 0 < κ < 1,5, vorzugsweise gilt 0,1 < κ < 1,5. Der Extinktionskoeffizient κ ist hierbei der Betrag des Imaginärteils des komplexen Brechungsindex n + i κ.

Gemäß zumindest einer Ausführungsform weist die lichtabsorbierende Schicht ein nicht stöchiometrisches Oxid oder Nitrid von einem der Elemente Al, Si, Ru, Ta, Zr, Hf, Y, Ti, C oder Nb auf. Diese Materialien sind gut dazu geeignet, einen Teil der Strahlung zu absorbieren.

Gemäß zumindest einer Ausführungsform weist die teiltransparente Metallschicht eine Dicke zwischen 0,5 nm und 20 nm auf. Bei einer Dicke in diesem Bereich besteht ein gutes Verhältnis zwischen Reflexion und Transmission der teiltransparenten Metallschicht, so dass ein ausreichend großer Anteil der von außen auf das Störstrahlung reduzierende Schichtsystem auftreffende Strahlung die teiltransparente Metallschicht passieren und von der strahlungsabsorbierenden Schicht absorbiert werden kann.

Gemäß zumindest einer Ausführungsform weist die teiltransparente Metallschicht Al, Ru, Ta, Zr, Hf, Y, Si, Ti oder Cr auf oder besteht daraus.

Bei einer bevorzugten Ausführungsform des Störstrahlung reduzierenden Schichtsystems sind zwischen der teiltransparenten Metallschicht und der mindestens einen reflexionsmindernden dielektrischen Schicht mindestens eine weitere lichtabsorbierende Schicht und mindestens eine weitere teiltransparente Metallschicht angeordnet. Ausgehend vom Substrat sind in dem Schichtsystem bei dieser Ausführungsform beispielsweise die lichtabsorbierende Schicht, die teiltransparente Metallschicht, eine zweite lichtabsorbierende Schicht, eine zweite teiltransparente Metallschicht und die mindestens eine reflexionsmindernde dielektrische Schicht in der genannten Reihenfolge angeordnet. Durch die zweifache Anordnung der lichtabsorbierenden Schicht und der teilreflektierenden Metallschicht kann vorteilhaft die Absorption des Schichtsystems weiter erhöht und die Reflexion weiter vermindert werden.

Gemäß zumindest einer Ausführungsform weist das Substrat eine Rauheitsstruktur auf. Die Rauheitsstruktur kann in dem Material des Substrats erzeugt sein, beispielsweise durch Sandstrahlen oder Ätzen. Alternativ kann ein Material auf die Substratoberfläche aufgebracht sein, dass die Rauheitsstruktur ausbildet. Beispielsweise können Partikel oder inselförmige Bereiche aus einem Oxidmaterial wie TiO₂ auf die Substratoberfläche aufgebracht werden. Das Material, das die Rauheitsstruktur ausbildet, kann insbesondere durch ein Druckverfahren wie beispielsweise ein Inkjet-Verfahren aufgebracht werden.

Alternativ oder zusätzlich kann eine Oberfläche der reflexionsmindernden dielektrischen Schicht eine Rauheitsstruktur aufweisen. Eine Rauheitsstruktur an der Oberfläche der reflexionsmindernden dielektrischen Schicht kann in gleicher Weise hergestellt werden wie zuvor für die Substratoberfläche beschrieben. Durch die Rauheitsstruktur des Substrats und/der der Oberfläche der reflexionsmindernden dielektrischen Schicht kann insbesondere die spekulare Reflexion vermindert werden.

Die Rauheitsstruktur des Substrats und/oder der Oberfläche der reflexionsmindernden dielektrischen Schicht weist vorzugsweise eine rms-Rauheit (root mean square) von mindestens 30 nm auf. Vorzugsweise beträgt die rms-Rauheit zwischen 30 nm und 600 nm, besonders bevorzugt zwischen 50 nm und 200 nm. Durch eine Rauheitsstruktur mit einer rms-Rauheit in diesem Bereich kann die spekulare Reflexion gut vermindert werden, wobei die diffuse Streuung noch moderat bleibt. Die Rauheitsstruktur weist vorteilhaft im Mittel ein Aspektverhältnis von weniger als 3:1, bevorzugt von weniger als 2:1 und besonders bevorzugt von weniger als 1:1 auf. Unter dem Aspektverhältnis ist hier das Verhältnis der Höhen zu den Breiten der Strukturen zu verstehen. Ein geringes Aspektverhältnis erleichtert die Reinigung des Schichtsystems.

Gemäß zumindest einer Ausführungsform beträgt die Reflexion des Störstrahlung reduzierenden Schichtsystems im Wellenlängenbereich von 300 nm bis 1100 nm weniger als 3%, besonders bevorzugt weniger als 2%. Die niedrige Reflexion kann bei dem Schichtsystem durch eine kombinierte Ausnutzung von Absorption, destruktiver Interferenz und Streuung erreicht werden.

Weiterhin wird ein Bauteil mit einem Störstrahlung reduzierenden Schichtsystem angegeben, das insbesondere wie vorstehend beschrieben ausgebildet ist. Das Bauteil ist beispielsweise ein optisches oder ein optoelektronisches Bauteil.

Das Bauteil weist gemäß zumindest einer Ausführungsform einen Detektor aufweist. Der Detektor ist beispielsweise zur Strahlungsdetektion in einem Wellenlängenbereich von 300 nm bis 1100 nm oder in einem Teilbereich dieses Wellenlängenbereichs eingerichtet.

Gemäß zumindest einer Ausführungsform des Bauteils ist das Substrat des Störstrahlung reduzierenden Schichtsystems ein Gehäuseteil des Bauteils.

Die Erfindung wird im Folgenden anhand von Ausführungsbeispielen im Zusammenhang mit den Figuren 1 bis 5 näher erläutert.

Es zeigen:
- Figur 1: eine schematische Darstellung eines Querschnitts durch ein Störstrahlung reduzierendes Schichtsystem gemäß einem ersten Ausführungsbeispiel,
- Figur 2: eine schematische Darstellung eines Querschnitts durch ein Störstrahlung reduzierendes Schichtsystem gemäß einem zweiten Ausführungsbeispiel,
- Figur 3: eine grafische Darstellung der Reflexion R in Abhängigkeit von der Wellenlänge λ bei einem weiteren Ausführungsbeispiel,
- Figur 4: eine grafische Darstellung der Reflexion R in Abhängigkeit von der Wellenlänge λ bei noch einem weiteren Ausführungsbeispiel, und
- Figur 5: eine schematische Darstellung eines Querschnitts durch ein optoelektronisches Bauteil gemäß einem Ausführungsbeispiel.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

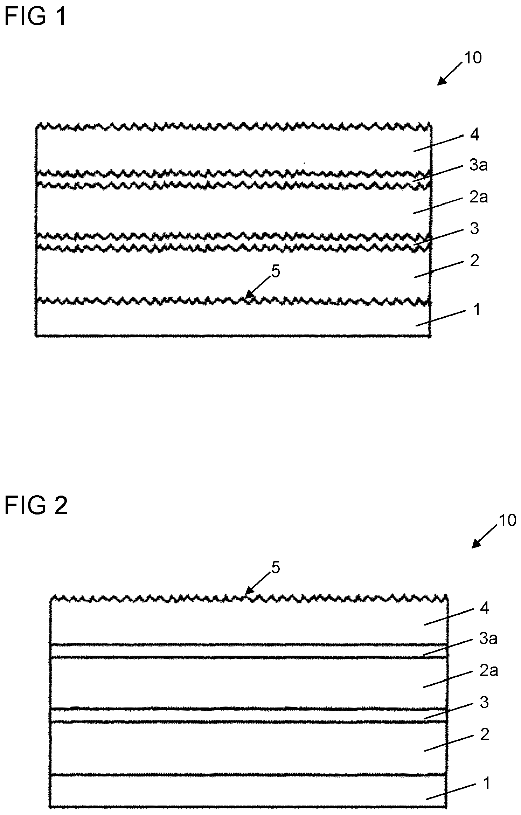

Das in Figur 1 dargestellte erste Ausführungsbeispiel des Störstrahlung reduzierenden Schichtsystems 10 weist ein Substrat 1 auf, dass ein beliebiges Bauteil wie zum Beispiel ein Gehäuseteil in einer optischen oder optoelektronischen Anwendung sein kann. Das Substrat 1 kann eben oder gekrümmt sein. Das Substrat 1 kann zum Beispiel ein Metall, ein Halbleitermaterial, ein Glas oder einen Kunststoff aufweisen. Auf dem Substrat 1 sind eine teiltransparente lichtabsorbierende Schicht 2, eine teiltransparente Metallschicht 3, eine teiltransparente zweite lichtabsorbierende Schicht 2a, eine teiltransparente zweite Metallschicht 3a und eine reflexionsmindernde dielektrische Schicht 4 angeordnet.

Die lichtabsorbierenden Schichten 2, 2a weisen jeweils ein nicht stöchiometrisches Oxid oder Nitrid von einem der Elemente Al, Si, Ru, Ta, Zr, Hf, Y, Ti, C oder Nb auf und sind vorzugsweise zwischen 25 nm und 500 nm dick. Für den Extensionskoeffizienten κ der lichtabsorbierenden Schichten 2, 2a gilt vorzugsweise 0 < κ < 1,5.

Die teiltransparenten Metallschichten 3 sind aus einem der Metalle Al, Ru, Ta, Zr, Hf, Y, Si, Ti oder Cr gebildet und sind vorzugsweise zwischen 0,5 nm und 20 nm dick.

Die reflexionsmindernde dielektrische Schicht 4 kann eine Einzelschicht sein oder mehrere Teilschichten aufweisen. Insbesondere kann die reflexionsmindernde dielektrische Schicht als dielektrisches Interferenzschichtsystem ausgeführt sein, dass mehrere Teilschichten aufweist. Geeignete Materialien für die mindestens eine dielektrische Schicht sind Oxide, Nitride oder Fluoride wie beispielsweise Siliziumoxid, Siliziumnitrid, Titanoxid, Aluminiumoxid, Aluminiumnitrid, Hafniumoxid oder Magnesiumfluorid. Wenn die reflexionsmindernde dielektrische Schicht als dielektrisches Interferenzschichtsystem mit mehreren Teilschichten ausgeführt ist, weisen die Teilschichten vorzugsweise abwechselnd einen niedrigeren Brechungsindex, beispielsweise n < 1,6 und einen höheren Brechungsindex, beispielsweise n > 1,6 oder n > 1,8, auf.

Weiterhin weist das Substrat 1 bei dem hier dargestellten Ausführungsbeispiel eine Rauheitsstruktur 5 auf. Die Rauheitsstruktur 5 kann beispielsweise dadurch erzeugt werden, das Substrat 1 durch Sandstrahlen oder Ätzen aufgeraut wird. Alternativ kann die Rauheitsstruktur 5 durch Aufbringen eines Materials auf das Substrat erzeugt werden, zum Beispiel durch Aufbringen einer inselförmigen Schicht. Das Material, das die Rauheitsstruktur 5 ausbildet, kann in diesem Fall durch ein Druckverfahren wie zum Beispiel ein Inkjet-Verfahren auf das Substrat 1 aufgebracht werden. Die Rauheitsstruktur weist vorzugsweise eine rms-Rauheit im Bereich zwischen 30 nm und 600 nm, bevorzugt im Bereich von 50 nm bis 250 nm, auf.

Das Störstrahlung reduzierende Schichtsystem zeichnet sich durch eine hohe Absorption und niedrige Reflexion aus. Die Reflexion wird zum einen durch die reflexionsmindernde dielektrische Schicht 4 an der Oberfläche des Schichtsystems vermindert. Weiterhin basiert das Schichtsystem auf dem Prinzip der destruktiven Interferenz, wobei durch eine geeignete Einstellung der Schichtdicken aller Einzelschichten die Reflexion minimiert wird. Eine hohe Absorption wird durch die lichtabsorbierenden Schichten 2, 2a und die teiltransparenten Metallschichten 3, 3a erzielt.

In Figur 2 ist ein zweites Ausführungsbeispiel des Störstrahlung reduzierenden Schichtsystems dargestellt. Dieses Beispiel unterscheidet sich von dem ersten Beispiel dadurch, dass das Substrat 1 nicht gezielt mit einer Rauheitsstruktur 5 versehen worden ist. Das Substrat 1 weist somit eine im Wesentlichen glatte Oberfläche auf. Dies schließt nicht aus, dass das Substrat eine fertigungsbedingte Rauheit aufweist, die typischerweise weniger als 5 nm, beispielsweise zwischen 1 nm und 5 nm, beträgt. Stattdessen ist bei diesem Beispiel die Oberfläche der reflexionsmindernden dielektrischen Schicht 4 mit einer Rauheitsstruktur 5 versehen worden. Die Rauheitsstruktur 5 weist eine rms-Rauheit im Bereich zwischen 30 nm und 600 nm, bevorzugt im Bereich von 50 nm bis 250 nm, auf. Die Herstellung der Rauheitsstruktur kann wie bei dem vorherigen Beispiel erfolgen. Durch die Rauheitsstruktur 5 kann die spekulare Reflexion an der Oberfläche weiter vermindert werden. Hinsichtlich weiterer möglicher Ausgestaltungen des Schichtsystems entspricht das zweite Ausführungsbeispiel dem ersten Ausführungsbeispiel.

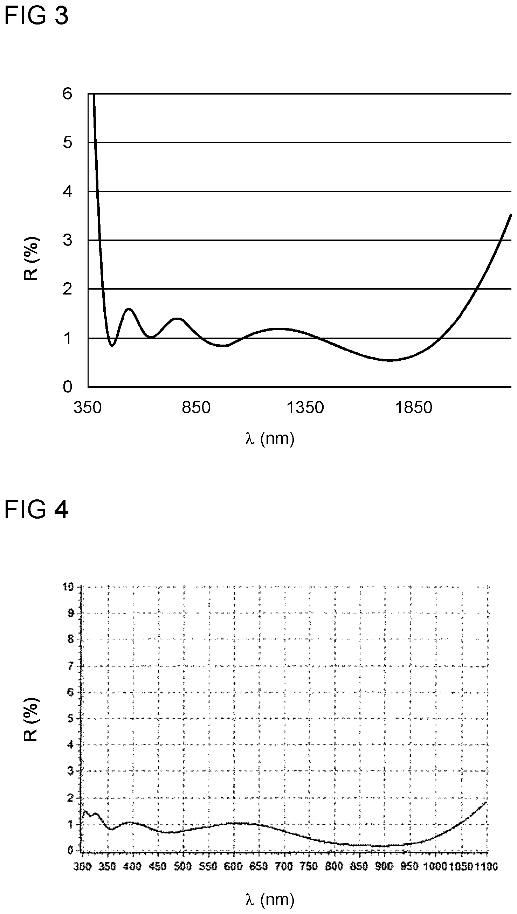

In Figur 3 ist die Reflexion R in Abhängigkeit von der Wellenlänge λ bei einem Ausführungsbeispiel des Störstrahlung reduzierenden Schichtsystems dargestellt. Das Schichtsystem weist bei diesem Beispiel ein Aluminium-Substrat, eine erste lichtabsorbierende Schicht (150 nm nicht stöchiometrisches AlOₓ), eine erste teiltransparente Metallschicht (10 nm Al), eine zweite lichtabsorbierende Schicht (45 nm nicht stöchiometrisches AlOₓ), eine zweite teiltransparente Metallschicht (6 nm Al), eine weitere lichtabsorbierende Schicht (75 nm nicht stöchiometrisches AlOₓ) und eine reflexionsmindernde dielektrische Schicht (80 nm SiO₂) auf. Es zeigt sich, dass mit dem Störstrahlung reduzierenden Schichtsystem eine besonders niedrige Reflexion vom UV-Bereich über den sichtbaren Bereich bis in den IR-Bereich hinein erzielt werden kann.

In Figur 4 ist die Reflexion R in Abhängigkeit von der Wellenlänge λ bei einem weiteren Ausführungsbeispiel des Störstrahlung reduzierenden Schichtsystems dargestellt. Bei diesem Ausführungsbeispiel ist das Schichtsystem für eine besonders niedrige Reflexion im Bereich von 300 nm bis 1100 nm optimiert worden. Wie in Figur 4 zu sehen, lässt sich im gesamten Wellenlängenbereich zwischen 300 nm 1100 nm eine Reflexion R von weniger als 2 % erzielen.

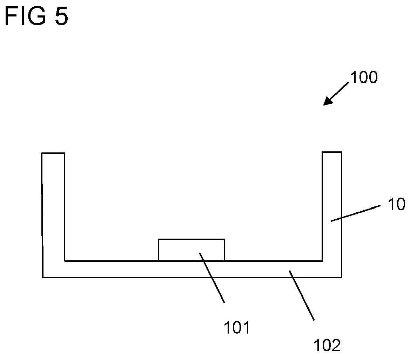

In Figur 5 ist ein Bauteil 100 mit einem Störstrahlung reduzierenden Schichtsystem 10 gezeigt, wobei das Störstrahlung reduzierende Schichtsystem 10 wie vorstehend beschrieben ausgebildet sein kann.

In dem gezeigten Ausführungsbeispiel ist das Substrat 1 des Störstrahlung reduzierenden Schichtsystems 10 ein Gehäuseteil 102 des Bauteils 100. Das Bauteil ist exemplarisch ein optoelektronisches Bauteil 100 mit einem Detektor 101. Mittels des Störstrahlung reduzierenden Schichtsystems 10 kann das Auftreffen von kritischer Störstrahlung auf die Innenwand des Gehäuses 102, die in dem Detektor 101 zu einem Störsignal führen könnte, reduziert werden. Das Substrat 1 kann jedoch alternativ oder zusätzlich ein anderes Teil des Bauteils sein. Weiterhin kann das Bauteil auch ein optisches Bauteil sein.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Störstrahlung reduzierendes Schichtsystem (10), umfassend
- ein Substrat (1),
- mindestens eine über dem Substrat (1) angeordnete teiltransparente lichtabsorbierende Schicht (2),
- mindestens eine über der teiltransparenten lichtabsorbierenden Schicht (2) angeordnete teiltransparente Metallschicht (3) und
- mindestens eine über der teiltransparenten Metallschicht angeordnete reflexionsmindernde dielektrische Schicht (4).

2. Störstrahlung reduzierendes Schichtsystem (10) nach Anspruch 1,
wobei die lichtabsorbierende Schicht (2) eine Dicke zwischen 25 nm und 500 nm aufweist.

3. Störstrahlung reduzierendes Schichtsystem (10) nach einem der vorhergehenden Ansprüche,
wobei die lichtabsorbierende Schicht (2) einen Extinktionskoeffizienten κ aufweist, für den gilt: 0 < κ < 1,5.

4. Störstrahlung reduzierendes Schichtsystem (10) nach einem der vorhergehenden Ansprüche,
wobei die lichtabsorbierende Schicht (2) ein nicht stöchiometrisches Oxid oder Nitrid von einem der Elemente Al, Si, Ru, Ta, Zr, Hf, Y, Ti, C oder Nb aufweist.

5. Störstrahlung reduzierendes Schichtsystem (10) nach einem der vorhergehenden Ansprüche,
wobei die teiltransparente Metallschicht (3) eine Dicke zwischen 0,5 nm und 20 nm aufweist.

6. Störstrahlung reduzierendes Schichtsystem (10) nach einem der vorhergehenden Ansprüche,
wobei die teiltransparente Metallschicht (3) Al, Ru, Ta, Zr, Hf, Y, Si, Ti oder Cr aufweist.

7. Störstrahlung reduzierendes Schichtsystem (10) nach einem der vorhergehenden Ansprüche,
wobei zwischen der teiltransparenten Metallschicht (3) und der reflexionsmindernden dielektrischen Schicht (4) mindestens eine weitere lichtabsorbierende Schicht (2a) und mindestens eine weitere teiltransparente Metallschicht (3a) angeordnet sind.

8. Störstrahlung reduzierendes Schichtsystem (10) nach einem der vorhergehenden Ansprüche,
wobei das Substrat (1) eine Rauheitsstruktur (5) aufweist.

9. Störstrahlung reduzierendes Schichtsystem (10) nach einem der vorhergehenden Ansprüche,
wobei eine Oberfläche der reflexionsmindernden dielektrischen Schicht (4) eine Rauheitsstruktur (5) aufweist.

10. Störstrahlung reduzierendes Schichtsystem (10) nach Anspruch 8 oder 9,
wobei die Rauheitsstruktur (5) eine rms-Rauheit von mindestens 30 nm aufweist.

11. Störstrahlung reduzierendes Schichtsystem (10) nach Anspruch 8 oder 9,
wobei die Rauheitsstruktur (5) eine rms-Rauheit von mindestens 30 nm und höchstens 200 nm aufweist, wobei die Rauheitsstruktur im Mittel ein Aspektverhältnis von weniger als 3:1 aufweist.

12. Störstrahlung reduzierendes Schichtsystem (10) nach einem der vorhergehenden Ansprüche,
wobei die Reflexion des Störstrahlung reduzierenden Schichtsystems im Wellenlängenbereich von 300 nm bis 1100 nm weniger als 3% beträgt.

13. Bauteil (100) mit einem Störstrahlung reduzierenden Schichtsystem (10) nach einem der Ansprüche 1 bis 12.

14. Bauteil (100) nach Anspruch 13,
wobei das Bauteil (100) einen Detektor (101) aufweist.

15. Optoelektronisches Bauteil (100) nach Anspruch 13 oder 14,
wobei das Substrat (1) ein Gehäuseteil (102) des Bauteils (100) ist.
